# EUROPEAN PATENT APPLICATION

(11) **EP 4 549 197 A1**
(43) Date of publication of application: **07.05.2025**
(21) Application number: 23829551.3
(22) Date of filing: 30.03.2023
(51) Int. Cl.: B60K 1/04, B60L 53/80

(54) **VEHICLE BODY SUPPORT FOR MOUNTING BATTERY PACK AND ELECTRIC VEHICLE**

(30) Priority: 30.06.2022 CN 202210772358
(71) Applicant: Aulton New Energy Automobile Technology Co., Ltd., Guangzhou, Guangdong 510700 (CN); Shanghai Dianba New Energy Technology Co., Ltd., Shanghai 201306 (CN)
(72) Inventor: ZHANG, Jianping, Shanghai 201306 (CN); WANG, Kaifeng, Shanghai 201306 (CN); ZHU, Ming, Shanghai 201306 (CN)
(74) Representative: Huang, Liwei
(86) International application number: PCT/CN2023/085033
(87) International publication number: WO 2024/001361

(57) **Abstract**

A vehicle body support (2) for mounting a battery pack and an electric vehicle (100) are provided. The vehicle body support (2) comprises a support body (20) and a flexible connection member (21), wherein the support body (20) is respectively connected to two vehicle beams (1) of the electric vehicle (100), the flexible connection member (21) is arranged between the support body (20) and at least one vehicle beams (1), and the flexible connection member (21) is configured to move the support body (20) relative to corresponding vehicle beam (1). The vehicle body support (2) is flexibly connected to the vehicle beams (1) by the flexible connection member (21), such that the inertial impact between the vehicle beams (1) and the support body (20) during operation of the vehicle can be reduced, the flexible connection member (21) provides a buffer for the inertial impact between the vehicle beams (1) and the support body (20), thereby preventing deformation of the vehicle body support (2) and preventing damage of the battery pack mounted on the vehicle body support (2), and prolonging the service life of the battery pack; flexible connection facilitates replacement of the battery pack on the vehicle body support, thereby reducing the requirement for the position accuracy of the vehicle body support during parking, and flexible connection facilitates mounting and disassembly of the vehicle body support, and facilitates maintenance of the vehicle body support.

## Description

The present invention claims priority to Chinese Patent Application No. 2022107723580 filed on June 30, 2022, of which the entire contents are incorporated herein by reference.

### TECHNICAL FIELD

The present invention relates to the technical field of electric vehicles, in particular to vehicle body support for mounting battery pack and electric vehicle.

### BACKGROUND

At present, the emission of vehicle exhaust is still an important factor in environmental pollution problems. In order to control vehicle exhaust, natural vehicles, hydrogen-fueled vehicles, solar-powered vehicles and electric vehicles have been developed to replace fuel-powered vehicles, and among the above vehicles, electric vehicles have the most promising application prospect.

The current electric vehicles mainly include direct-charging electric vehicles and quick-replacing electric vehicles. Due to restrictions on charging time and location, many new energy electric vehicles are now gradually adopting a mode of quickly replacing batteries for energy supply. When batteries of a quick-replacing electric vehicle are replaced, a battery swapping device of a battery swapping station moves below the electric vehicle and is positioned relative to a vehicle body support of the electric vehicle. The vehicle body support is in hard connection with the vehicle body, and during intense driving of the electric vehicle, hard impact easily occurs between the vehicle body support and the vehicle body, thereby leading to deformation of the vehicle body support, and the impact between the vehicle body support and the electric vehicle will damage the internal structure of the battery pack and affect the service life of the battery pack.

To sum up, the vehicle body support and the vehicle beam in the prior art are in hard connection, such that during intense driving of the electric vehicle, the vehicle body support and the battery pack are damaged, and the service life of the battery pack is influenced.

### SUMMARY

The technical problem to be solved in the present invention is to overcome shortcomings of the prior art that the vehicle body support is in hard connection with the vehicle beam, then the vehicle body support and the battery pack are damaged during intense driving of an electric vehicle and the service life of the battery pack is influenced, and provide a vehicle body support for mounting a battery pack and an electric vehicle.

The present invention solves the above technical problems through the following technical solutions:
The present invention provides a vehicle body support for mounting a battery pack is provided. The vehicle body support includes a support body and a flexible connection member, wherein the support body is connected to two vehicle beams of an electric vehicle respectively, the flexible connection member is arranged between the support body and at least one of the vehicle beams, and the flexible connection member is configured to move the support body relative to the corresponding vehicle beam.

In the present solution, the vehicle body support is flexibly connected to the vehicle beam by using a flexible connection member. Compared with a rigid connection between the vehicle body support and the vehicle beam in the prior art, inertial impact between the vehicle beam and the support body during operation of a vehicle can be reduced, and the flexible connection member provides a buffer for the inertial impact between the vehicle beam and the support body, thereby preventing deformation of the vehicle body support and preventing damage of the battery pack mounted on the vehicle body support when the battery pack is impacted, prolonging the service life of the battery pack, and reducing the cost of the entire vehicle; flexible connection facilitates replacement of the battery pack on the vehicle body support, thereby reducing requirements for position accuracy of the vehicle body support during parking; and flexible connection facilitates mounting and disassembly of the vehicle body support and facilitates maintenance of the vehicle body support.

Preferably, the flexible connection member includes a first adapter and a second adapter, wherein one of the first adapter and the second adapter is arranged on the support body, another one is arranged on one of the vehicle beams, and the first adapter and the second adapter are movably connected.

In the present solution, the above structural form is adopted, the vehicle body support is flexibly connected to the vehicle beams through movable connection between the first adapter and the second adapter, the vehicle body support can flexibly float relative to the vehicle beams, and the structure is simple.

Preferably, the first adapter includes a first connecting seat and an adapter shaft sleeve, the second adapter includes a second connecting seat and an adapter shaft, wherein one of the first connecting seat and the second connecting seat is configured to be connected to one of the vehicle beams, and another one is connected to the support body, the adapter shaft sleeve is connected to the first connecting seat, the adapter shaft is connected to the second connecting seat, and the adapter shaft sleeve is sleeved on an outer side of the adapter shaft.

In the present solution, the above structural form is adopted, the adapter shaft sleeve is sleeved on the outer side of the adapter shaft. Through rotational connection between the adapter shaft and the adapter shaft sleeve, the first adapter is movably connected with the second adapter. Rotational connection can rotate without restraint, and has enough rigidity to withstand bending moments, such that the support body and the vehicle beams only transmit a vertical shear force and do not transmit bending moments. This connection mode can rotate without restraint.

Preferably, a second gap is arranged between the adapter shaft and the adapter shaft sleeve; and/or along a direction parallel to the vehicle beams, a first gap is arranged between the first adapter and the second adapter.

In the present solution, a second gap is arranged between the adapter shaft and the adapter shaft sleeve, and a second gap is arranged between the first adapter and the second adapter. The second gap can increase a floating range of the vehicle body support along a width direction of the vehicle body, and the vehicle body support can float along a vertical direction, thereby improving the buffering capacity between the vehicle body support and the vehicle beam, and reducing the impact between the vehicle body support and the vehicle beam. In addition, a greater buffering force can also be provided by adopting the above structural form, such that the vehicle beam assembly can return to a stable state more quickly after being impacted; in addition, a first gap is arranged between the first adapter and the second adapter, thereby realizing floating along a length direction of the vehicle body, when the vehicle speed suddenly changes, the support body moves in the first gap, and friction is generated due to the weight of the vehicle body support, thereby reducing the impact between the second adapter and the first adapter on the vehicle body support, further reducing a hard impact between the vehicle body support and the vehicle beam, and preventing deformation of the vehicle body support. In addition, this structure is more beneficial to the mounting of the first adapter or the second adapter, also facilitates disassembly between the first adapter and the second adapter, and facilitates maintenance of the vehicle body support.

Preferably, the flexible connection member further includes a flexible sleeve, and the flexible sleeve is arranged between the adapter shaft and the adapter shaft sleeve.

In the present solution, a flexible sleeve is sleeved on the outer side of the adapter shaft. This structure is more beneficial to the mounting of the first adapter or the second adapter. When there is an impact between the vehicle body support and the vehicle beams, the flexible sleeve deforms to absorb impact between the vehicle body support and the vehicle beams. The flexible sleeve improves the buffering capacity between the first adapter and the second adapter.

Preferably, the flexible connection member further includes a pressing sleeve, the pressing sleeve is arranged between the flexible sleeve and the adapter shaft sleeve, and the pressing sleeve is tightly fitted with the adapter shaft sleeve.

In the present solution, the flexible connection member further includes a pressing sleeve, and the pressing sleeve is tightly fitted with the adapter shaft sleeve to further press the flexible sleeve, thereby improving mounting stability of the flexible sleeve.

Preferably, the flexible connection member further includes an elastic pad, the elastic pad is arranged on the first connection member and/or the second connection member, and the elastic pad is located in the first gap.

In the present solution, an elastic pad is arranged on an outer side of the adapter shaft and/or on a side of the second connection member facing towards the adapter shaft, thereby improving a buffering capacity between the second connection member on the vehicle body support and the first connection member on the vehicle beam in a plane vertical to the longitudinal direction of the vehicle beam, and decreasing the hard impact on the vehicle body support and the hard impact between the vehicle beams.

Preferably, the flexible connection member further includes a sliding bearing, and the sliding bearing is arranged between the adapter shaft and the adapter shaft sleeve.

In the present solution, the sliding bearing is arranged between the adapter shaft and the adapter shaft sleeve, thereby being beneficial to improving smoothness of rotation between the adapter shaft and the adapter bearing.

Preferably, a limiting block is arranged on a side of the support body facing towards the vehicle beam, and the limiting block is configured to abut against the vehicle beam and restrict movement of the support body towards the vehicle beam.

In the present solution, the limiting block can limit floating of the vehicle body support within a preset range to avoid hard collision between the vehicle body support and the vehicle beam due to overlarge floating of the vehicle body support.

Preferably, the flexible connection member is arranged between the support body and each of the vehicle beams, and at least two of the flexible connection members are arranged between the support body and each of the vehicle beams.

In the present solution, at least two of the flexible connection members are arranged on each side of the support body to facilitate assembly and disassembly of the vehicle body support. The two flexible connection members improve reliability of connection between the support body and the vehicle beams; and at least two flexible connection members are mounted on two sides of the vehicle beams, thereby greatly increasing the buffering range and improving the buffering capacity between the vehicle body support and the vehicle beams.

Preferably, the flexible connection member and the support body are arranged on an inner side of each of the vehicle beams.

In the present solution, the vehicle body support configured to mount a battery pack can fully use the space between two vehicle beams of an electric vehicle and the height space below the vehicle beam. When the battery pack is disassembled by a battery swapping device, the vehicle body support is placed on an inner side of the vehicle beam, therefore, space can be saved.

Preferably, the support body includes two longitudinal beams, and the two longitudinal beams are respectively connected to the corresponding vehicle beams through the flexible connection member, each of the longitudinal beams includes a horizontal mounting plate, a vertical connecting plate and a reinforcing rib plate, the flexible connection member is arranged on the horizontal mounting plate, the vertical connecting plate is connected to one side of the horizontal mounting plate, and the reinforcing rib plate is connected to the horizontal mounting plate and the vertical connecting plate, respectively.

In the present solution, the flexible connection member is arranged on the horizontal mounting plate to facilitate mounting of the flexible connection member, and the vertical connecting plate is connected to one side of the horizontal mounting plate to facilitate connection between the longitudinal beam and other parts and improve the structural strength of the longitudinal beam. Further, the reinforcing rib plate is connected to the horizontal mounting plate and the vertical connecting plate, respectively, to further improve the structural strength of the longitudinal beam.

Preferably, the support body further includes a reinforcing cross beam, the reinforcing cross beam is arranged between the two longitudinal beams, and two ends of the reinforcing cross beam are respectively connected to the corresponding vertical connecting plate.

In the present solution, the support body is further provided with a reinforcing cross beam. The reinforcing cross beam is arranged on the two longitudinal beam supports. Two ends of the reinforcing cross beam are connected to corresponding vertical connecting plates, respectively. The above overall structure improves the overall structural strength of the support body, and enhances the ability of the support body in resisting against an impact from the vehicle body.

Preferably, an edge of another side of the horizontal mounting plate opposite to the vertical connecting plate is bent upwards to form a first flange; and/or an edge of a side of the vertical connecting plate away from the horizontal mounting plate is folded towards a horizontal direction to form a second flange.

In the present solution, the edge of another side of the horizontal mounting plate opposite to the vertical connecting plate is bent upwards to form a first flange, thereby improving the bending resistance of the horizontal mounting plate. The first flange, the horizontal mounting plate and the vertical mounting plate together form a groove shaped like a Chinese character "ji", thereby greatly improving reliability of the connection between the flexible connection member and the vehicle body support and between the vehicle beams; an edge of a side of the vertical connecting plate away from the horizontal mounting plate is folded towards the horizontal direction to form a second flange, thereby improving the bending resistance of the horizontal mounting plate and being beneficial to improving the structural strength of the connection between the reinforcing cross beam and the longitudinal beam.

Preferably, a cable slot is arranged on the support body, and the cable slot is configured to arrange cables.

In the present solution, the cable slot is configured to facilitate arrangement of cables and provide effective protection for cables.

Preferably, the vehicle body support further includes a connector support, the connector support is connected to the support body, and the connector support is configured to mount a vehicle end connector.

In the present solution, the vehicle body support is further provided with a connector support for mounting the vehicle end connector (such as a vehicle end electrical connector), so as to facilitate connection between the electrical connector on the battery pack and the vehicle end electrical connector.

Preferably, the connector support is provided with a positioning hole for insertion of a positioning pin on a battery swapping device.

In the present solution, the positioning hole is formed at the bottom portion of the connector support to facilitate insertion of the positioning column of the battery swapping device from bottom to top, thereby further fixing the position of the battery swapping device and ensuring accurate alignment of the battery swapping device and the battery pack. Moreover, during mounting and disassembly processes of the battery pack, there is no relative displacement exits between the battery swapping device and the electric vehicle, thereby facilitating mounting and disassembly of the battery pack.

Preferably, the connector support is further provided with a first sensor, and the first sensor is configured to detect whether the positioning pin is inserted in place.

In the present solution, the first sensor is arranged on the connector support, and the first sensor detects whether the positioning pin is inserted in place, so as to ensure that the positioning pin is inserted accurately and reliably, and improve safety of the battery swapping device during a battery replacement process.

Preferably, the vehicle body support further includes a locking mechanism, and the locking mechanism is configured to fit with a locking member of the battery pack to lock or unlock the battery pack.

In the present solution, the vehicle body support includes a locking mechanism, such that the battery pack can be connected to the vehicle body support through the locking mechanism, so as to ensure that the battery pack is locked on the vehicle body support. When the battery pack needs to be replaced, the locking mechanism is unlocked and the battery pack is disassembled from the vehicle body support.

Preferably, the vehicle body support further includes a detection assembly configured to detect whether the locking mechanism is locked and unlocked in place, the detection assembly includes a second sensor and an identification member, and the identification member is arranged on the locking mechanism, the second sensor is arranged on the support body, and the position of the second sensor corresponds to the position of the identification member when the locking mechanism is in a locked state.

In the present solution, the detection assembly improves reliability of the locking mechanism in locking the battery pack, thereby ensuring that the battery pack is reliably fixed on the vehicle body support.

The present invention provides an electric vehicle, the electric vehicle includes a vehicle body support configured to mount a battery pack as described above, and the vehicle body support configured to mount a battery pack is connected to a vehicle beam of the electric vehicle.

In the present solution, the vehicle body support is flexibly connected to the vehicle beam by using a flexible connection member. Compared with a rigid connection between the vehicle body support and the vehicle beam in the prior art, an inertial impact between the vehicle beam and the support body during operation of a vehicle can be reduced, and the flexible connection member provides a buffer for the inertial impact between the vehicle beam and the support body, thereby preventing deformation of the vehicle body support and preventing damage of the battery pack mounted on the vehicle body support when the battery pack is impacted, prolonging the service life of the battery pack, and reducing the cost of the entire vehicle; flexible connection facilitates replacement of the battery pack on the vehicle body support, thereby reducing requirements for position accuracy of the vehicle body support during parking; and flexible connection facilitates mounting and disassembly of the vehicle body support and facilitates maintenance of the vehicle body support.

On the basis of common sense in the field, the above preferred conditions can be combined arbitrarily to obtain preferred examples of the present invention.

The positive and progressive effects of the present invention are as follows: the vehicle body support is flexibly connected to the vehicle beam by using a flexible connection member. Compared with a rigid connection between the vehicle body support and the vehicle beam in the prior art, inertial impact between the vehicle beam and the support body during operation of a vehicle can be reduced, and the flexible connection member provides a buffer for the inertial impact between the vehicle beam and the support body, thereby preventing deformation of the vehicle body support and preventing damage of the battery pack mounted on the vehicle body support when the battery pack is impacted, prolonging the service life of the battery pack, and reducing the cost of the entire vehicle; flexible connection facilitates replacement of the battery pack on the vehicle body support, thereby reducing requirements for position accuracy of the vehicle body support during parking; and flexible connection facilitates mounting and disassembly of the vehicle body support and facilitates maintenance of the vehicle body support.

### BRIEF DESCRIPTION OF THE DRAWINGS

FIG. 1 is a three-dimensional structural schematic diagram of an electric vehicle according to an embodiment of the present invention.
FIG. 2 is a structural schematic diagram of connection between a vehicle body support and a vehicle beam according to an embodiment of the present invention.
FIG. 3 is a three-dimensional structural schematic diagram of a flexible connection member according to an embodiment of the present invention.
FIG. 4 is a sectional view of a flexible connection member according to an embodiment of the present invention.
FIG. 5 is a schematic diagram of part of the structure of a vehicle body support according to an embodiment of the present invention.
FIG. 6 is a schematic diagram of a mounting structure of a locking mechanism and a second sensor according to an embodiment of the present invention.
FIG. 7 is a three-dimensional structural schematic diagram of a locking base according to an embodiment of the present invention.
FIG. 8 is a three-dimensional structural schematic diagram of a connector support portion according to an embodiment of the present invention.

### Reference numerals in the figures:

electric vehicle 100; vehicle beam 1; vehicle body support 2; support body 20; cable slot 201; flexible connection member 21; first adapter 211; first connecting seat 2111; adapter shaft sleeve 2112; second adapter 212; second connecting seat 2121; adapter shaft 2122; longitudinal beam 22; horizontal mounting plate 221; first flange 2211; vertical connecting plate 222; second flange 2222; reinforcing rib plate 223; reinforcing cross beam 23; connector support 24; vehicle end electrical connector 241; positioning hole 242; first sensor 2421; locking mechanism 25; locking base 251; locking tongue 252; locking link 253; second sensor 26; second gap 3; flexible sleeve 31; pressing sleeve 32; first gap 4.

### DETAILED DESCRIPTION OF THE EMBODIMENTS

The present invention will be clearly and completely described below with preferred embodiments as an example and in combination with drawings.

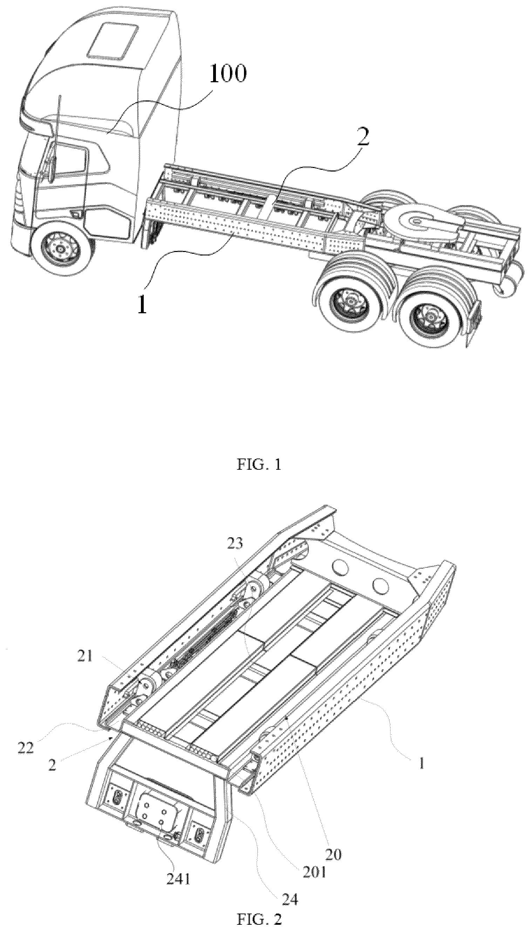

As shown in FIGS. 1 to 8, the present embodiment provides an electric vehicle 100, the electric vehicle 100 includes the above vehicle body support 2 configured to mount a battery pack, and the vehicle body support 2 configured to mount the battery pack is connected to the vehicle beam 1 of the electric vehicle 100.

Wherein, the vehicle body support 2 is flexibly connected to the vehicle beam 1 by using a flexible connection member 21. Compared with a rigid connection between the vehicle body support 2 and the vehicle beam 1 in the prior art, inertial impact between the vehicle beam 1 and the support body 20 during operation of a vehicle can be reduced, and the flexible connection member 21 provides a buffer for the inertial impact between the vehicle beam 1 and the support body 20, thereby preventing deformation of the vehicle body support 2 and preventing damage of the battery pack mounted on the vehicle body support 2 when the battery pack is impacted, prolonging the service life of the battery pack, and reducing the cost of the entire vehicle; flexible connection facilitates replacement of the battery pack on the vehicle body support 2, thereby reducing requirements for position accuracy of the vehicle body support 2 during parking; and flexible connection facilitates mounting and disassembly of the vehicle body support 2 and facilitates maintenance of the vehicle body support 2.

The vehicle body support 2 includes a support body 20 and a flexible connection member 21. As shown in FIG. 2, the support body 20 is connected to two vehicle beams 1 of the electric vehicle 100, respectively. A flexible connection member 21 is arranged between the support body 20 and at least one vehicle beam 1. The flexible connection member 21 is configured to move the support body 20 relative to the corresponding vehicle beam 1.

Wherein, the vehicle body support 2 is flexibly connected to the vehicle beam 1 by using a flexible connection member 21, thereby reducing an inertial impact between the vehicle beam 1 and the support body 20 during operation of a vehicle, and the flexible connection member 21 provides a buffer for the inertial impact between the vehicle beam 1 and the support body 20, thereby preventing deformation of the vehicle body support 2; flexible connection reduces requirements for position accuracy of the vehicle body support 2 during parking; and flexible connection facilitates mounting and disassembly of the vehicle body support 2 and facilitates maintenance of the vehicle body support 2.

As shown in FIGS. 1 and 2, in the present embodiment, a flexible connection member 21 is arranged between the support body 20 and each of the two vehicle beams 1, and the flexible connection member 21 is configured to move the support body 20 relative to the corresponding vehicle beam 1. In the present embodiment, a flexible connection member 21 is arranged on each of the two sides at which the support body 20 is connected to the vehicle beam 1, thereby increasing a buffer area between the vehicle body support 2 and the vehicle beam 1, and improving the impact resistance of the vehicle body support 2. In other embodiments, the flexible connection member 21 can also be arranged only on one side of the support body 20 that is connected to the vehicle beam 1. One side of the support body 20 is fixedly connected to the vehicle beam 1 through fasteners (such as bolts), and another side is flexibly connected to the vehicle beam 1, therefore, the inertial impact can also be buffered. In practical applications, the number and position of the flexible connection members 21 can be specifically set according to requirements, which is not specifically limited in the present embodiment.

In the present embodiment, two flexible connection members 21 are arranged between the support body 20 and each of the vehicle beams 1 to facilitate assembly and disassembly of the vehicle body support 2. The two flexible connection members 21 improve reliability of connection between the support body 20 and the vehicle beam 1; at least two flexible connection members 21 are mounted on two sides of the vehicle beam 1, thereby greatly increasing the buffering range and improving the buffering capacity between the vehicle body support 2 and the vehicle beam 1. In other embodiments, the flexible connection member 21 is arranged between the support body 20 and each of the two vehicle beams 1, and three or more flexible connection members 21 may be arranged between the support body 20 and each of the vehicle beams 1. Three or more flexible connection members 21 are mounted on two sides of the vehicle beams 1, thereby further increasing the buffering range and improving the buffering capacity between the vehicle body support 2 and the vehicle beams 1.

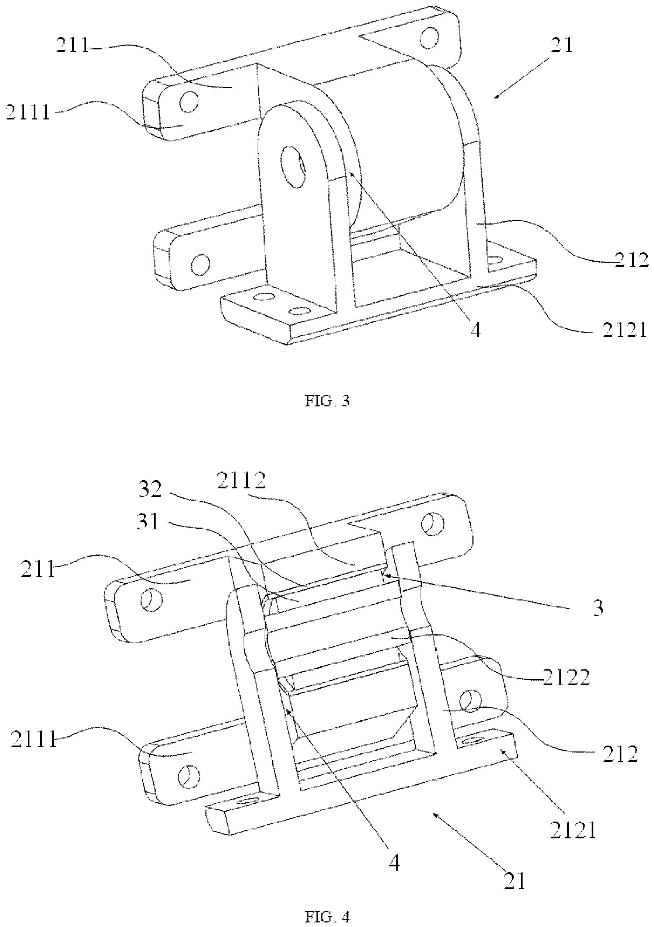

In the present embodiment, as shown in FIGS. 3 and 4, the flexible connection member 21 includes a first adapter 211 and a second adapter 212, wherein the first adapter 211 is arranged on the support body 20, the second adapter 212 is arranged on one of the vehicle beam 1, and the first adapter 211 and the second adapter 212 are movably connected.

In another embodiment, the flexible connection member 21 includes a first adapter 211 and a second adapter 212, wherein the second adapter 212 is arranged on the support body 20, the first adapter 211 is arranged on the vehicle beam 1, and the first adapter 211 and the second adapter 212 are movably connected.

Wherein, the above structural form is adopted, the vehicle body support is flexibly connected to the vehicle beam through movable connection between the first adapter 211 and the second adapter 212, the vehicle body support can flexibly float relative to the vehicle beams, and the structure is simple.

In one embodiment, the first adapter 211 includes a first connecting seat 2111 and an adapter shaft sleeve 2112, the second adapter 212 includes a second connecting seat 2121 and an adapter shaft 2122, the second connecting seat 2121 is configured to be connected to one of the vehicle beams 1, the first connecting seat 2111 is connected to the support body 20, the adapter shaft sleeve 2112 is connected to the first connecting seat 2111, the adapter shaft 2122 is connected to the second connecting seat 2121, and the adapter shaft sleeve 2112 is sleeved on the outer side of the adapter shaft 2122.

In the present embodiment, the first adapter 211 includes a first connecting seat 2111 and an adapter shaft sleeve 2112, the second adapter 212 includes a second connecting seat 2121 and an adapter shaft 2122, the first connecting seat 2111 is configured to be connected to one of the vehicle beams 1, the second connecting seat 2121 is connected to the support body 20, the adapter shaft sleeve 2112 is connected to the first connecting seat 2111, the adapter shaft 2122 is connected to the second connecting seat 2121, and the adapter shaft sleeve 2112 is sleeved on the outer side of the adapter shaft 2122.

Wherein, the above structural form is adopted, the adapter shaft sleeve 2112 is sleeved on the outer side of the adapter shaft 2122. Through movable connection between the adapter shaft 2122 and the adapter shaft sleeve 2112, rotational connection can rotate without restraint and has enough rigidity to withstand bending moments, such that the support body and the vehicle beams only transmit a vertical shear force and do not transmit bending moments, and this connection mode can rotate without restraint. In addition, if the magnitude of the inertia force on both ends of the vehicle body support 2 is different, or if the direction of the inertia force is different, at this time, the vehicle body support 2 can rotate around the vehicle beam 1 under the effect of the inertia force, such that the inertia force can be prevented from damaging the battery pack through rotation, and the service life of the battery pack can be prolonged. During rotation of the vehicle body support 2, the adapter shaft sleeve 2112 can prevent collision between the vehicle body support 2 and the vehicle beams 1, and the adapter shaft sleeve 2112 can reduce the magnitude of the inertia force to which the vehicle body support 2 is subjected during rotation, thereby allowing the vehicle body support 2 to return to a smooth state more quickly.

In the present embodiment, a second gap 3 is arranged between the adapter shaft 2122 and the adapter shaft sleeve 2112. Specifically, the diameter of the adapter shaft 2122 is less than the diameter of the through hole of the adapter shaft sleeve 2112 to form a second gap 3 between the adapter shaft 2122 and the adapter shaft sleeve 2112.

Wherein a second gap 3 is arranged between the adapter shaft 2122 and the adapter shaft sleeve 2112, and a second gap 3 is arranged between the first adapter 211 and the second adapter 212. The second gap 3 can increase a floating range of the vehicle body support 2 along a width direction of the vehicle body, and the vehicle body support 2 can float along a vertical direction, thereby improving the buffering capacity between the vehicle body support 2 and the vehicle beam 1, and reducing the impact between the vehicle body support 2 and the vehicle beam 1. In addition, a greater buffering force can also be provided by adopting the above structural form, such that the assembly of the vehicle beam 1 can return to a stable state more quickly after being impacted. The second gap 3 also facilitates mounting and disassembly between the adapter shaft 2122 and the adapter shaft sleeve 2112.

In addition, along a direction parallel to the vehicle beam 1, a first gap 4 is arranged between the first adapter 211 and the second adapter 212. Specifically, the axial distance between ear portions at two ends of the first adapter 211 is greater than the length of the adapter shaft sleeve 2112 to form the first gap 4. In the present embodiment, the maximum value of the first gap 4 along an axial direction of the adapter shaft 2122 is not greater than 5mm. A first gap 4 is arranged between the first adapter 211 and the second adapter 212, and floating along a length direction of the vehicle body is realized. When the vehicle speed suddenly changes, the support body 20 moves in the first gap 4, friction is generated due to the weight of the vehicle body support 2, thereby reducing the impact between the second adapter 212 and the first adapter 211 on the vehicle body support 2, further reducing a hard impact between the vehicle body support 2 and the vehicle beam 1, and preventing deformation of the vehicle body support 2. In addition, this structure is more convenient for the mounting of the first adapter 211 or the second adapter 212, and also facilitates mutual disassembly of the first adapter 211 and the second adapter 212, thereby facilitating maintenance of the vehicle body support 2.

As shown in FIG. 4, in one embodiment, the flexible connection member 21 further includes a flexible sleeve 31, and the flexible sleeve 31 is arranged between the adapter shaft 2122 and the adapter shaft sleeve 2112. In the present embodiment, a flexible sleeve 31 is arranged on an outer side of the adapter shaft 2122. This structure is more beneficial to the mounting of the first adapter 211 or the second adapter 212. When there is an impact between the vehicle body support 2 and the vehicle beam 1, the flexible sleeve 31 deforms to absorb the impact between the vehicle body support 2 and the vehicle beam 1. The flexible sleeve 31 improves the buffering capacity between the first adapter 211 and the second adapter 212.

Specifically, the flexible sleeve 31 is made of an elastic material. More specifically, the flexible sleeve 31 may be, but is not limited to, a rubber sleeve. In the present embodiment, the adapter shaft sleeve 2112 and the adapter shaft 2122 are movably connected through deformation of the flexible sleeve 31 to realize movable connection between the first adapter 211 and the second adapter 212, such that the vehicle body support 2 floats relative to the vehicle beam 1.

Further, a rubber sleeve is sleeved on the outer side of the adapter shaft 2122 to fill the second gap 3, and the inner and outer sides of the rubber sleeve abut against the adapter shaft 2122 and the adapter shaft sleeve 2112, respectively. The rubber sleeve is not displaced relative to the adapter shaft 2122 and the adapter shaft sleeve 2112 under the effect of a frictional force. When there is an impact between the vehicle body support 2 and the vehicle beam 1, the first adapter 211 and the second adapter 212 will move along the corresponding vehicle body support 2 and the vehicle beams 1, respectively. Due to the effect of the rubber sleeve, the adapter shaft sleeve 2112 will not rotate relative to the adapter shaft 2122. At this time, the rubber sleeve is squeezed under force and is deformed in the direction of the force, thereby realizing the buffering effect between the adapter shaft sleeve 2112 and the adapter shaft 2122, reducing the impact force, and realizing smooth floating of the vehicle body support 2 relative to the vehicle beams 1. The direction of force may be a vertical direction, a direction parallel to the width direction of the vehicle body, and an arbitrary direction along a circumferential direction of the adapter shaft 2122. The rubber sleeve can absorb the inertial impact between the vehicle beams 1 and the support body 20 in an arbitrary direction along the circumferential direction of the adapter shaft 2122 during operation of the vehicle, and the buffering effect is favorable.

In the present embodiment, as shown in FIGS. 3 and 4, the flexible connection member 21 further includes a pressing sleeve 32, the pressing sleeve 32 is arranged between the flexible sleeve 31 and the adapter shaft sleeve 2112, and the pressing sleeve 32 is tightly fitted with the adapter shaft sleeve 2112. The flexible connection member 21 also includes a pressing sleeve 32, the pressing sleeve 32 is tightly fitted with the adapter shaft sleeve 2112 to further press the flexible sleeve 31, thereby improving the mounting stability of the flexible sleeve 31.

Specifically, the pressing sleeve 32 may be made of, but is not limited to, a metal material. Preferably, the pressing sleeve 32 is made of a steel sleeve. In the present embodiment, the pressing sleeve 32 is tightly fitted with the adapter shaft sleeve 2112, such that the adapter shaft sleeve 2112, the pressing sleeve 32, the rubber sleeve and the adapter shaft 2122 are tightly fitted, so as to ensure that the flexible sleeve 31 will not rotate or move relative to the adapter shaft 2122 and the adapter shaft sleeve 2112, there is no relative displacement occurs between the adapter shaft sleeve 2112, the pressing sleeve 32, the flexible sleeve 31 and the adapter shaft 2122, thereby effectively ensuring that the flexible sleeve 31 is mounted stably and reliably, enabling the force on the flexible sleeve 31 to be more stable in the event of an impact between the vehicle body support 2 and the vehicle beams 1, and ensuring that the flexible sleeve 31 stably absorbs the impact between the vehicle body support 2 and the vehicle beams 1. Further, the degree of tightness between the pressing sleeve 32 and the adapter shaft sleeve 2112 satisfies that no relative displacement occurs between the adapter shaft sleeve 2112, the pressing sleeve 32, the rubber sleeve, and the adapter shaft 2122 when the rubber sleeve does not deform, which is not specifically limited in the present embodiment.

In one embodiment, the flexible connection member 21 further includes an elastic pad, the elastic pad is arranged on the first adapter 211, and the elastic pad is located in the first gap 4; or in another embodiment, the flexible connection member 21 further includes an elastic pad, the elastic pad is arranged on the second adapter 212, and the elastic pad is located in the first gap 4. Further, in other embodiments, an elastic pad can also be arranged on the first adapter 211 and the second adapter 212 at the same time, which is not specifically limited in the present embodiment.

Wherein, an elastic pad is arranged on the outer side of the adapter shaft 2122 and/or on a side of the second adapter 212 facing towards the adapter shaft 2122, thereby improving the buffering capacity between the second connection member on the vehicle body support 2 and the first connection member on the vehicle beam 1 in a plane vertical to the longitudinal direction of the vehicle beams 1, and decreasing the hard impact on the vehicle body support 2 and the vehicle beams 1.

In other alternative embodiments, the flexible connection member 21 further includes a sliding bearing, and the sliding bearing is arranged between the adapter shaft 2122 and the adapter shaft sleeve 2112.

Wherein, the sliding bearing is arranged between the adapter shaft 2122 and the adapter shaft sleeve 2112, thereby being beneficial to improving smoothness of rotation between the adapter shaft 2122 and the adapter shaft sleeve 2112. In addition, the sliding bearing operates smoothly and reliably without noise. Under liquid lubrication conditions, the sliding surfaces are separated by lubricating oil without direct contact, thereby further greatly reducing friction loss and surface abrasion. The oil film also has a certain vibration-absorbing ability.

In the present embodiment, a limiting block is arranged on a side of the support body 20 facing towards the vehicle beams 1. The limiting block is configured to abut against the vehicle beams 1 and limit movement of the support body 20 towards the vehicle beams 1. Specifically, the limiting block may be made of, but is not limited to, an elastic material (such as rubber).

Wherein, the limiting block can limit movement of the vehicle body support 2 within a preset range, thereby improving reliability of the distance between the vehicle body support 2 and the vehicle beams 1, preventing hard collision between the vehicle body support 2 and the vehicle beams 1 due to overlarge floating of the vehicle body support 2, further preventing direct impact between the vehicle body support 2 and the vehicle beams 1 due to failure of the flexible connection member 21, and effectively protecting the vehicle body support 2 and the vehicle beam 1.

In the present embodiment, the flexible connection member 21 and the support body 20 are arranged on an inner side of each of the vehicle beams 1. Wherein, the vehicle body support 2 configured to mount a battery pack can fully use the space between two vehicle beams 1 of an electric vehicle 100 and the height space below the vehicle beams 1. When the battery pack is disassembled by a battery swapping device, the vehicle body support 2 is placed on the inner side of each of the vehicle beams 1, therefore, space can be saved.

In other embodiments, the support body 20 can also be connected to an outer side of each of the vehicle beams 1 through the flexible connection member 21 to utilize the space on the outer side of the vehicle beam 1. If the support body 20 is located on the outer side of the vehicle beam 1, the flexible connection member 21 and the support body 20 are arranged on the outer side of each of the vehicle beams 1, and the support body 20 is connected to an outer side wall of the vehicle beam 1 through the flexible connection member 21. In practical applications, specific positions at which the support body 20 is connected to the vehicle beams 1 need to be specifically selected according to requirements during practical applications, which is not specifically limited in the present embodiment.

In the present embodiment, the support body 20 includes two longitudinal beams 22. The two longitudinal beams 22 are respectively connected to the corresponding vehicle beams 1 through flexible connection members 21. The longitudinal beam 22 includes a horizontal mounting plate 221, a vertical connecting plate 222 and a reinforcing rib plate 223, the flexible connection member 21 is arranged on the horizontal mounting plate 221, the vertical connecting plate 222 is connected to one side of the horizontal mounting plate 221, and the reinforcing rib plate 223 is connected to the horizontal mounting plate 221 and the vertical connecting plate 222, respectively.

Wherein, the flexible connection member 21 is arranged on the horizontal mounting plate 221 to facilitate the mounting of the flexible connection member 21. The vertical connecting plate 222 is connected to one side of the horizontal mounting plate 221 to facilitate connection between the longitudinal beam 22 and other parts and to improve the structural strength of the longitudinal beam 22. Further, the reinforcing rib plate 223 is respectively connected to the horizontal mounting plate 221 and the vertical connecting plate 222 to further improve the structural strength of the longitudinal beams 22.

In the present embodiment, the support body 20 further includes a reinforcing cross beam 23, the reinforcing cross beam 23 is arranged between the two longitudinal beams 22, and two ends of each of the reinforcing cross beams 23 are respectively connected to corresponding vertical connecting plates 222. The reinforcing cross beams 23 are uniformly arranged between the two longitudinal beams 22, and the number of the reinforcing cross beams 23 is determined according to the weight borne by the vehicle body support 2.

Wherein, the support body 20 is also provided with reinforcing cross beams 23. The reinforcing cross beams 23 are arranged on the supports of the two longitudinal beams 22. The two ends of the reinforcing cross beams 23 are respectively connected to the corresponding vertical connecting plates 222. The above overall structure improves the overall structural strength of the support body 20, and enhances the ability of the support body 20 in resisting against impact from the vehicle body.

In the present embodiment, an edge of another side of the horizontal mounting plate 221 opposite to the vertical connecting plate 222 is bent upwards to form a first flange 2211; and
an edge of a side of the vertical connecting plate 222 away from the horizontal mounting plate 221 is folded towards a horizontal direction to form a second flange 2222.

Wherein, the edge of another side of the horizontal mounting plate 221 opposite to the vertical connecting plate 222 is bent upwards to form a first flange 2211, thereby improving the bending resistance of the horizontal mounting plate 221. The first flange 2211, the horizontal mounting plate 221 and the vertical connecting plate 222 together form a groove shaped like a Chinese character "ji", thereby greatly improving reliability of the connection between the flexible connection member 21 and the vehicle body support 2 and between the vehicle beams 1; an edge of a side of the vertical connecting plate 222 away from the horizontal mounting plate 221 is folded towards a horizontal direction to form a second flange 2222, thereby improving the bending resistance of the vertical connecting plate 222, and being applicable to being connected to the reinforcing cross beams 23, and being conductive to improving the structural strength of connection between the reinforcing cross beams 23 and the longitudinal beam 22.

Further, it should be noted that the flexible connection member 21 and the vehicle body support 2 having the flexible connection member 21 in the above embodiment can be implemented separately in actual applications, which is not specifically limited in the above embodiment.

In the present embodiment, the support body 20 is provided with a cable slot 201, and the cable slot 201 is configured to arrange cables.

Wherein, the cable slot 201 is arranged to facilitate the arrangement of cables and to provide limited protection for the cables. The cable slot 201 and the vehicle body support 2 having the cable slot 201 in the present embodiment can also be implemented separately in actual applications, which is not specifically limited in the present embodiment.

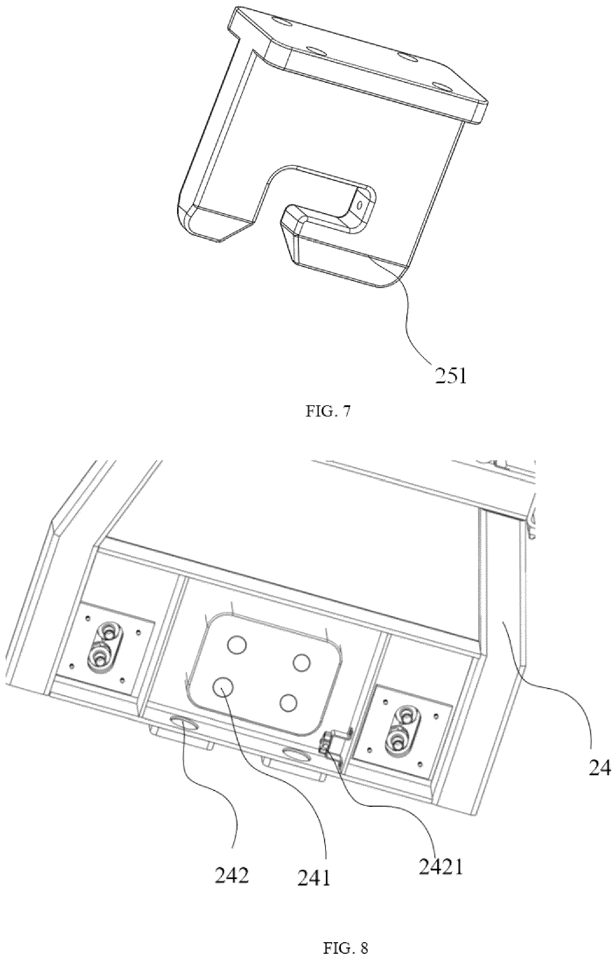

In the present embodiment, as shown in FIG. 7, the vehicle body support 2 further includes a connector support 24, the connector support 24 is connected to the support body 20, and the connector support 24 is configured to mount a vehicle end connector (such as a vehicle end electrical connector 241).

Wherein, the vehicle body support 2 is also provided with a connector support 24 for mounting a vehicle end connector 241, so as to facilitate connection between the electrical connector on the battery pack and the vehicle end electrical connector 241.

Specifically, the vehicle end connector may include, but is not limited to, the vehicle end connector 241 and/or a liquid cooling connector. Wherein, the vehicle end connector 241 is configured to be connected to the electrical connector on the battery pack, so as to ensure a power supply function of the battery pack. The liquid cooling connector is configured to be connected to the liquid cooling connector on the battery pack, and the liquid cooling connector is configured to be respectively connected to a cooling system and the liquid cooling connector at the battery pack end to cool the batteries in the battery pack.

It should be noted that the connector support 24 and the vehicle body support 2 having the connector support 24 in the present embodiment can also be implemented separately in practical applications, which is not specifically limited in the present embodiment.

In the present embodiment, the connector support 24 is provided with a positioning hole 242 for insertion of a positioning pin on a battery swapping device.

Wherein a positioning hole 242 for insertion of a positioning column on the battery swapping device is formed at the bottom portion of the connector support 24. Specifically, the positioning hole 242 passes through the bottom portion of the connector support 24 to facilitate insertion of the positioning column of the battery swapping device from bottom to top, thereby further fixing the position of the battery swapping device, ensuring accurate alignment of the battery swapping device and the battery pack, and ensuring no relative displacement between the battery swapping device and the electric vehicle during mounting and disassembly processes of the battery pack, and facilitating mounting and disassembly of the battery pack.

In one embodiment, as shown in FIG. 8, the connector support 24 is further provided with a first sensor 2421. The first sensor 2421 is configured to detect whether the positioning pin is inserted in place, thereby ensuring that the positioning pin is inserted accurately and reliably, and improving safety of the battery swapping device during a battery replacement process.

Wherein, a first sensor 2421 is arranged on the connector support 24. The first sensor 2421 detects whether the positioning pin is inserted in place, thereby improving the safety of the battery swapping device during the battery replacement process. Further, the first sensor 2421 may adopt, but is not limited to, a Hall sensor. The positioning pin is provided with magnetic steel. The Hall sensor can detect the magnetic steel on the positioning pin, thereby determining whether the positioning pin is in place; when the positioning pin is separated from the positioning hole 242, the Hall sensor cannot detect the signal of the magnetic steel, and further determines that the battery swapping device is separated from the vehicle body support 2.

Further, it should be noted that the vehicle body support 2 having the positioning hole 242 in the above embodiment can also be implemented separately in actual applications, which is not specifically limited in the above embodiment.

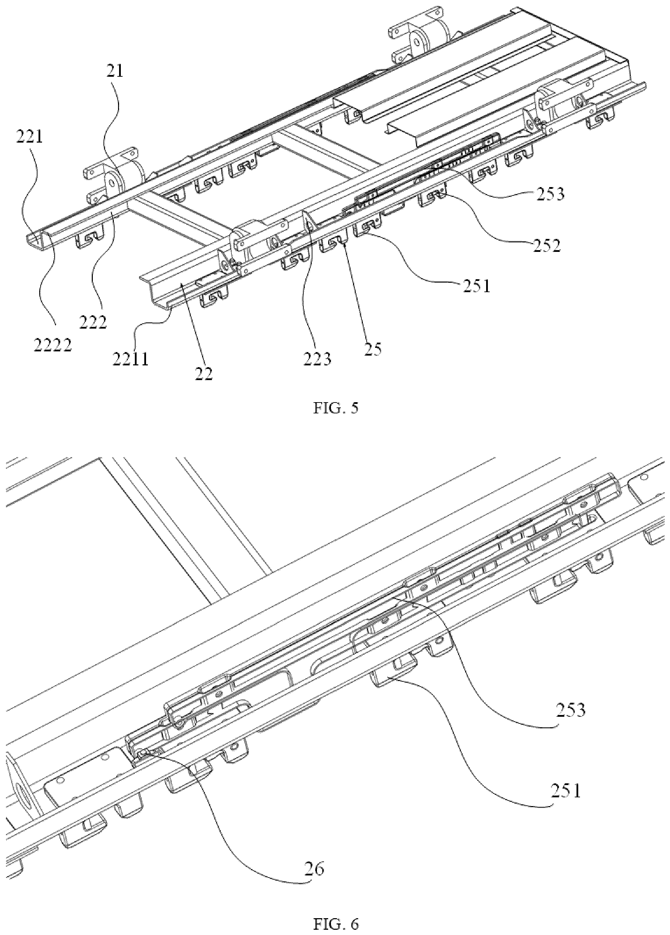

In one embodiment, as shown in FIGS. 5 and 7, the vehicle body support 2 further includes a locking mechanism 25, the locking mechanism 25 is configured to fit with a locking member of the battery pack to lock or unlock the battery pack. Wherein, the locking mechanism is arranged on the support body 20, such that the battery pack can be connected to the vehicle body support 2 through the locking mechanism 25, to ensure that the battery pack is locked on the vehicle body support 2. When the battery pack needs to be replaced, the locking mechanism 25 is unlocked and the battery pack is removed from the vehicle body support 2.

In one embodiment, the locking mechanism 25 includes a locking base 251. One end of the locking base 251 is connected to the support body 20, and another end extends below the support body 20. An opening and a slide which extends from the opening are arranged below the locking base 251, the opening allows a lock shaft on the battery pack to enter and exit the slide, and the opening and the slide penetrate pass through the locking base 251 along an axial direction of the lock shaft. The locking base 251 is arranged on the support body 20, the opening of the locking base 251 is arranged below, and a battery box enters the slide through the opening below, such that the battery box is locked in the slide, thereby avoiding the battery box from entering the slide from the side surface of the locking base 251, avoiding the lock shaft from sliding out from one side of the locking base 251, and improving the safety in locking of the battery box.

Specifically, in the present embodiment, the locking member on the battery pack is a lock shaft. Two ends of the lock shaft are exposed out of the slide. Two ends of the lock shaft are connected to the battery pack, such that the middle portion of the lock shaft is clamped in the slide, and two ends of the lock shaft bear an acting force of the battery box, thereby improving the uniformity of the force on the lock shaft, preventing the lock shaft from sliding out from one side of the locking base 251, and improving the safety of locking of the battery box.

In one embodiment, the locking mechanism 25 also includes a locking tongue 252 and a locking link 253; the locking tongue 252 is pivoted on the locking base 251, and the locking tongue 252 can swing in an accommodating groove and the slide to connect or block the slide; the locking link 253 acts on the locking tongue 252, and the locking link 253 is configured to drive the locking tongue 252 to swing. The locking tongue 252 is arranged in the accommodating groove, has a compact structure and is easy to operate. The locking tongue 252 can lock the lock shaft on the battery pack in the slide, and the locking link 253 is convenient for exerting an acting force on the locking tongue 252 and for synchronously controlling a plurality of locking tongues 252.

In other embodiments, the locking base 251 can also be connected to the lock shaft through a bolt-type lock or a T-type lock, which is not specifically limited in the above embodiments. Specifically, a first threaded part can be arranged in the opening of the locking base 251, and a second threaded part fitting with the first threaded part is matchingly arranged on the lock shaft of the battery pack, that is, the locking base 251 is connected to the lock shaft through a bolt-type lock, and the locking base 251 and the lock shaft are locked through fitting between the first threaded part and the second threaded part; or a stopping part is arranged in the opening of the locking base 251, and a limiting part fitting with a stopping part is matchingly arranged on the lock shaft of the battery pack, such that the locking base 251 is connected with the lock shaft through a T-type lock, and the locking base 251 and the lock shaft are locked through fitting between the limiting part and the stopping part.

Further, it should be noted that the locking mechanism 25 and the vehicle body support 2 having the above locking mechanism 25 in the above embodiment can also be implemented separately in practical applications, which is not specifically limited in the above embodiment.

In one embodiment, as shown in FIG. 6, the vehicle body support 2 further includes a detection assembly configured to detect whether the locking mechanism 25 is locked and unlocked in place. The detection assembly includes a second sensor 26 and an identification member. The identification member is arranged on the locking mechanism 25, the second sensor 26 is arranged on the support body 20, and the position of the second sensor 26 corresponds to the position of the identification member when the locking mechanism 25 is in a locked state. Specifically, the identification member is preferably arranged on the locking link 253. By arranging the identification member on the locking link 253 and correspondingly arranging the second sensor 26 on the support body 20, and by arranging the detection assembly, whether the locking mechanism 25 is locked in place can be detected timely and reliably, thereby being beneficial to improving the locking reliability of the battery pack. Further, the detection assembly can also detect whether unlocking is in place to ensure that the unlocking is accurate and reliable.

Further, the second sensor 26 may adopt, but is not limited to, a Hall sensor, and the identification member may adopt, but is not limited to, magnetic steel. The locking mechanism 25 is provided with magnetic steel. When the locking mechanism 25 is in a locked state, the locking link 253 falls down, the position of the magnetic steel corresponds to the position of the Hall sensor, and the Hall sensor can detect the magnetic steel, thereby determining that the locking is in place; when the locking mechanism 25 is in an unlocked state, the locking link 253 is jacked up, and the magnetic steel moves along with the corresponding locking link 253, and after the locking link 253 is jacked up, the Hall sensor cannot detect the signal of the magnetic steel, and then determines that the unlocking is in place.

It should be noted that the detection assembly and the vehicle body support 2 having the detection assembly in the present embodiment can be implemented separately in actual applications, which is not specifically limited in the present embodiment.

Wherein, the detection assembly improves the reliability of locking the battery pack by the locking mechanism 25 and ensures that the battery pack is reliably fixed on the vehicle body support 2.

In the present embodiment, the support body 20 is provided with lighting holes. The lighting holes are formed to reduce the weight of the support body 20 and reduce the cost while meeting the requirements of structural strength. Specifically, in the present embodiment, lighting holes are formed on the reinforcing rib plates. In other embodiments, lighting holes can also be formed on the longitudinal beams and reinforcing cross beams, which is not specifically limited in the present embodiment.

Although specific embodiments of the present invention have been described above, those skilled in the art will understand that these are merely examples, and the protection scope of the present invention is defined by the appended claims. Those skilled in the art can make various changes or modifications to these embodiments without departing from the principles and essence of the present invention, but these changes and modifications shall all fall within the protection scope of the present invention.

## Claims

1. A vehicle body support for mounting a battery pack, comprising: a support body and a flexible connection member,
wherein the support body is connected to two vehicle beams of an electric vehicle respectively, and the flexible connection member is arranged between the support body and at least one of the vehicle beams, and the flexible connection member is configured to move the support body relative to the corresponding vehicle beam.

2. The vehicle body support for mounting a battery pack according to claim 1, wherein the flexible connection member comprises a first adapter and a second adapter, and one of the first adapter and the second adapter is arranged on the support body, another one is arranged on one of the vehicle beams, and the first adapter and the second adapter are movably connected.

3. The vehicle body support for mounting a battery pack according to claim 2, wherein the first adapter comprises a first connecting seat and an adapter shaft sleeve, the second adapter comprises a second connecting seat and an adapter shaft, one of the first connecting seat and the second connecting seat is configured to be connected to one of the vehicle beams, and another one is connected to the support body, the adapter shaft sleeve is connected to the first connecting seat, the adapter shaft is connected to the second connecting seat, and the adapter shaft sleeve is sleeved on an outer side of the adapter shaft.

4. The vehicle body support for mounting a battery pack according to claim 3, wherein a second gap is arranged between the adapter shaft and the adapter shaft sleeve; and/or
along a direction parallel to the vehicle beams, a first gap is arranged between the first adapter and the second adapter.

5. The vehicle body support for mounting a battery pack according to claim 4, wherein the flexible connection member further comprises an elastic pad, the elastic pad is arranged on the first connection member and/or the second connection member, and the elastic pad is located in the first gap.

6. The vehicle body support for mounting a battery pack according to any one of claims 3 to 5, wherein the flexible connection member further comprises a sliding bearing, and the sliding bearing is arranged between the adapter shaft and the adapter shaft sleeve.

7. The vehicle body support for mounting a battery pack according to any one of claims 3 to 5, wherein the flexible connection member further comprises a flexible sleeve, and the flexible sleeve is arranged between the adapter shaft and the adapter shaft sleeve.

8. The vehicle body support for mounting a battery pack according to claim 7, wherein the flexible connection member further comprises a pressing sleeve, the pressing sleeve is arranged between the flexible sleeve and the adapter shaft sleeve, and the pressing sleeve is tightly fitted with the adapter shaft sleeve.

9. The vehicle body support for mounting a battery pack according to any one of claims 1 to 8, wherein a limiting block is arranged on a side of the support body facing towards one of the vehicle beams, and the limiting block is configured to abut against one of the vehicle beams and restrict movement of the support body towards the vehicle beams.

10. The vehicle body support for mounting a battery pack according to any one of claims 1 to 9, wherein the flexible connection member is arranged between the support body and each of the vehicle beams, and at least two of the flexible connection members are arranged between the support body and each of the vehicle beams; and/or
the flexible connection member and the support body are arranged on an inner side of each of the vehicle beams.

11. The vehicle body support for mounting a battery pack according to any one of claims 1 to 10, wherein the support body comprises two longitudinal beams, and the two longitudinal beams are respectively connected to the corresponding vehicle beams through the flexible connection member, each of the longitudinal beams comprises a horizontal mounting plate, a vertical connecting plate and a reinforcing rib plate, the flexible connection member is arranged on the horizontal mounting plate, the vertical connecting plate is connected to one side of the horizontal mounting plate, and the reinforcing rib plate is connected to the horizontal mounting plate and the vertical connecting plate, respectively.

12. The vehicle body support for mounting a battery pack according to claim 11, wherein the support body further comprises a reinforcing cross beam, the reinforcing cross beam is arranged between the two longitudinal beams, and two ends of the reinforcing cross beam are respectively connected to the corresponding vertical connecting plate.

13. The vehicle body support for mounting a battery pack according to claim 11 or 12, wherein an edge of another side of the horizontal mounting plate opposite to the vertical connecting plate is bent upwards to form a first flange; and/or
an edge of a side of the vertical connecting plate away from the horizontal mounting plate is folded towards a horizontal direction to form a second flange.

14. The vehicle body support for mounting a battery pack according to any one of claims 1 to 13, wherein a cable slot is arranged on the support body, and the cable slot is configured to arrange cables.

15. The vehicle body support for mounting a battery pack according to any one of claims 1 to 14, wherein the vehicle body support further comprises a connector support, the connector support is connected to the support body, and the connector support is configured to mount a vehicle end connector.

16. The vehicle body support for mounting a battery pack according to claim 15, wherein the connector support is provided with a positioning hole for insertion of a positioning pin on a battery swapping device.

17. The vehicle body support for mounting a battery pack according to claim 16, wherein the connector support is further provided with a first sensor, and the first sensor is configured to detect whether the positioning pin is inserted in place.

18. The vehicle body support for mounting a battery pack according to any one of claims 1 to 17, wherein the vehicle body support further comprises a locking mechanism, and the locking mechanism is configured to fit with a locking member of the battery pack to lock or unlock the battery pack.

19. The vehicle body support for mounting a battery pack according to claim 18, wherein, the vehicle body support further comprises a detection assembly configured to detect whether the locking mechanism is locked and unlocked in place, the detection assembly comprises a second sensor and an identification member, and the identification member is arranged on the locking mechanism, the second sensor is arranged on the support body, and a position of the second sensor corresponds to a position of the identification member when the locking mechanism is in a locked state.

20. An electric vehicle, comprising a vehicle body support for mounting a battery pack as claimed in any one of claims 1 to 19, wherein the vehicle body support for mounting a battery pack is connected to a vehicle beam of the electric vehicle.
